(19) Europäisches Patentamt / European Patent Office / Office européen des brevets

(11) **EP 3 220 219 B1**

(12) **EUROPEAN PATENT SPECIFICATION**

(45) Date of publication and mention
of the grant of the patent:
**23.12.2020 Bulletin 2020/52**

(51) Int Cl.:
**G05B 19/042** *(2006.01)* **G05B 17/02** *(2006.01)*

(21) Application number: **17152038.0**

(22) Date of filing: **18.01.2017**

(54) **SETTING SUPPORT DEVICE, SETTING SUPPORT METHOD, INFORMATION PROCESSING PORGRAM AND RECORDING MEDIUM**

EINSTELLUNTERSTÜTZUNGSVORRICHTUNG, EINSTELLUNTERSTÜTZUNGSVERFAHREN, INFORMATIONSVERARBEITUNGSPROGRAMM UND AUFZEICHNUNGSMEDIUM

DISPOSITIF DE PRISE EN CHARGE DE RÉGLAGE, PROCÉDÉ DE PRISE EN CHARGE DE RÉGLAGE, PROGRAMME DE TRAITEMENT D'INFORMATIONS ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2016 JP 2016049395**

(43) Date of publication of application:
**20.09.2017 Bulletin 2017/38**

(73) Proprietor: **Omron Corporation
Kyoto 600-8530 (JP)**

(72) Inventors:
• **MORI, Yasumoto
Kyoto-shi, Kyoto 600-8530 (JP)**
• **EGI, Mamoru
Kyoto-shi, Kyoto 600-8530 (JP)**
• **SATO, Fumiaki
Kyoto-shi, Kyoto 600-8530 (JP)**

(74) Representative: **Becker & Kurig Partnerschaft
Patentanwälte PartmbB
Bavariastrasse 7
80336 München (DE)**

(56) References cited:
**EP-A1- 0 813 131     EP-A1- 2 579 115**

• **: Marek Stulrajter ET AL: "Introduction Motor Control Application Tuning (MCAT) Tool for 3-Phase PMSM", , 1 January 2013 (2013-01-01), XP055375749, Retrieved from the Internet: URL:http://cache.nxp.com/assets/documents/data/en/application-notes/AN4642.pdf [retrieved on 2017-05-24]**
• **Bishwajit Dash ET AL: "GUI/Simulink Based Interactive Interface for a DC Motor with PI Controller", International Journal of Scientific & Engineering Research Volume, 1 December 2011 (2011-12-01), XP055375812, Retrieved from the Internet: URL:http://www.ijser.org/researchpaper\GUI -Simulink-Based-Interactive-Interface-for- a-DC-Motor-with-PI-Controller.pdf**

**Description**

BACKGROUND OF THE INVENTION

1. Field of the Invention

The invention relates to a setting support device and so on for supporting the setting of control parameters of a motor control device, and the motor control device controls a motor for driving a load device.

2. Description of Related Art

In order to improve the controllability (responsibility and stability) of a controlled object including a motor, control parameters suitable for the controlled object need to be set. Therefore, for example, a control system is disclosed in patent document 1, and the control system uses an operational model to execute the simulation of parameter change and adjustment, and automatically sets an adjustment condition for a servo system on the basis of a simulation result.
Moreover, a driving apparatus is disclosed in non-patent document 1, and the driving apparatus measures the response of a real machine by changing the combination of speed control gain and model control gain, and displays setting time, overshoot or other indexes with colors.

Documents of the Prior Art

Patent Documents

Patent Document 1: Japanese Unexamined Patent Application Publication No. 2009-122779 (disclosed on June 4, 2009)

Non-patent Document

Non-patent Document 1: Mitsubishi Electric, "MR Configurator", [on-line], [retrieved on March 10, 2016 (Heisei 28)], Internet <URL: http://www.mitsubishielectric.co.jp/fa/ products/drv/servo/smerit/mr/setup_popup.html>
Marek Stulrajter ET AL: "Introduction Motor Control Application Tuning (MCAT) Tool for 3-Phase PMSM", 1 January 2013 discloses a freescale motor control tuning solution known as Motor Control Application Tuning (MCAT) tool, a graphical tool serving to motor control development and the operators of modern electrical drives. Provided are automatic calculation and real-time tuning of selected control structure parameters. The MCAT tool enables splitting the control structure and consequently to control the motor at various levels of cascade control structure.

SUMMARY OF THE INVENTION

[Problems to Be Solved by the Invention]

For example, even in the case of a common feedback controller for position control, there will be more than three control parameters, such as position proportional gain, speed proportional gain and speed integral gain, which need to be set in order to improve the controllability of a controlled object.
However, in the structure recorded in patent document 1, only the simulation of changing two control parameters may be executed. For control parameters, there also exists a circumstance, that is, when one control parameter is changed, the optimal values of the other control parameters will be changed, and in the case that only two control parameters may be simulated, it is highly possible that it is hard to set a plurality of control parameters as appropriate values.
Moreover, likewise in the structure disclosed by non-patent document 1, only two control parameters may be changed, and the same problem is produced as in patent document 1. Further, in non-patent document 1, because a real machine needs to be driven and a measurement result needs to be used, time is needed for processing.
The invention is achieved in view of the problems, and the invention is directed to implement a setting support device and so on for supporting the easy and appropriate setting of a plurality of control parameters.

[Technical Means for Solving the Problems]

In order to solve the problems, the setting support device of the invention is a setting support device which supports the setting of a plurality of control parameters used in control processing in a motor control device, where the setting support device includes: a test action instruction part, for changing at least one value among the plurality of control parameters, so as to enable the motor control device to actually control multiple test actions, or controlling multiple test actions by utilizing the simulation of a hypothetical model of the motor control device; a parameter adjustment part, for setting whether to make the second control parameters, except the first control parameters of which the values are changed in the test actions, among the plurality of control parameters to change along with the first control parameters; and a performance index calculation part, for working out performance indexes of the control of the motor control device according to a result of the test actions. The setting support device further comprises a display control part, controlling display by correlating the performance indexes worked out by the performance index calculation part with the values of the first control parameters, wherein the display control part controls the display of relational graphs. The relational graphs represent the relations between values of the performance indexes and the m types of first control parameters; and when the performance indexes are correlated with the n types of first control parameters, the display control part controls the simultaneous or selective display of relational graphs for each of m combinations selected from n combinations, wherein m is an integer greater than 2, and n is an integer meeting $n \geqq m$. According to the structure, the relations between the various first control parameters and the performance indexes are displayed simultaneously or selectively, so the user may control the setting of values of the control parameters in consideration of the various first control parameters.

In the structure, the test action is performed for multiple times by changing the values of the control parameters, and according to a result of the test action, performance indexes of the control of the motor control device are worked out. Here, the control parameters are classified as the first control parameters and the second control parameters, and moreover, whether the second control parameters change along with the first control parameters or not may be set. That is, the test action may be executed under the condition that the second control parameters change along with the first control parameters or under the condition that the second control parameters do not change along with the first control parameters, so the variation of conditions of the test action may be increased. Therefore, respectively setting optimal values for a plurality of control parameters may be supported.

According to the structure, since the performance indexes and the values of the first control parameters are correlated for display, a user may select preferred values of the first control parameters by verifying the displayed content.

In the setting support device of the invention, the parameter adjustment part may also set the second control parameters to change along with the first control parameters or as any fixed values.

According to the structure, it may be chosen to set the second control parameters as any fixed values, so, for example when the user finds out referred values of the second control parameters according a situation, the test actions which adopt the values may be executed.

In the setting support device of the invention, the control parameters may also be control parameters of a controller composing a feedback control system in the motor control device.

In the structure, since the control parameters are the control parameters of the controller composing the feedback control system, it is considered that the case that the control parameters affect each other and the case that the control parameters do not affect each other will coexist. Therefore, according to the structure, in the case that the second control parameters affect the first control parameters, the setting support device may be set that the second control parameters change along with the first control parameters, and on the other hand, in the case that the second control parameters do not affect the first control parameters, the setting support device may be set that the second control parameters do not change along with the first control parameters.

In the setting support device of the invention, the first control parameters may also include the speed proportional gain of a speed controller composing the feedback control system.

In the feedback control system in the motor control device, the speed controller is essentially a necessary component. Moreover, in an ordinary motor-controlled feedback control system, a speed controller is arranged between a position controller and a torque filter. Then, among parameters of the speed controller, the case that the speed proportional gain has great affection on other control parameters happens a lot.

That is, the speed proportional gain is an important control parameter in the motor-controlled feedback control system, and moreover, it is highly possible that the speed proportional gain will affect other control parameters. Thus, by setting the speed proportional gain as the first control parameter, the conditions of the test action may be adjusted more accurately for execution.

The case of setting speed proportional gain and speed integral gain as the first control parameters or the case of setting speed proportional gain and position proportional gain as the first control parameters may be taken as an example. According to these examples, since the two control parameters which have great affection on performance indexes are set as the first control parameters, the adjustment of each control parameter to achieve preferred performance indexes may be realized more easily.

In the setting support device of the invention, the second control parameters may also include cutoff frequency of a torque filter composing the feedback control system.

In general, in the motor-controlled feedback control system, the torque filter is arranged at the rear section of the speed controller. At this point, if the speed proportional gain is increased, then a higher frequency band will also become a controlled object, so, for the torque filter for limiting the frequency band as the controlled object by means of the cutoff frequency, the parameters must be changed. That is, by changing the cutoff frequency of the torque filter along with the speed proportional gain just like in the structure, the setting of values of the parameters matching with the frequency band as the controlled object may be realized.

In the setting support device of the invention, the motor control device may also include a feedforward control part, where the feedforward control part outputs, based on the hypothetical model of the motor control device, at least one of model position, model speed and model torque as target values of the position, speed and torque of a motor, and the control parameters also include control parameters of a controller composing the feedforward control part.

In the structure, the control parameters also further include the control parameters of the controller composing the feedforward control system. Therefore, in the structure having both the feedback control system and the feedforward control system, the setting of the control parameters may be supported.

In the setting support device of the invention, the display control part may also control the display of relational graphs, where the relational graphs represent the relations between values of the performance indexes and the first control parameters; and moreover, the display control part controls the simultaneous or selective display of relational graphs for each of the various performance indexes.

According to the structure, the relational graphs of values of various performance indexes and the first control parameters are displayed simultaneously or selectively, so the user may control the setting of values of the control parameters in consideration of the various performance indexes.

In the setting support device of the invention, the display control part may also control the display of relational graphs, where the relational graphs represent the relations between values of the performance indexes and the first control parameters; and moreover, the setting support device also includes a parameter setting part, where the parameter setting part receives information of any points, selected by the user, in the relational graphs, and moreover, the first control parameters corresponding to the selected points are set as control parameters used in control processing in the motor control device.

According to the structure, the user may set control parameters used in control processing in the motor control device by selecting any points in the relational graphs representing the relations between values of the performance indexes and the first control parameters. Therefore, the setting processing of control parameters may be performed easily and quickly.

In the setting support device of the invention, the display control part may also control the display of relational graphs, where the relational graphs represent the relations between values of the performance indexes and the m (m is an integer greater than 2) types of first control parameters by means of m axes; and moreover, the display control part controls the change of at least one of display range and resolution in the axes.

According to the structure, the relations between values of the performance indexes and the m types of first control parameters are displayed as the relational graphs by means of the m axes, and moreover, the change of any one of display range and resolution in the axes is controlled. Therefore, the display of the relational graphs suitable for support for the selection of control parameters may be realized according to a situation.

In order to solve the problems, a setting support device of the invention is a setting support which supports the setting of a plurality of control parameters used in control processing in a motor control device, where the setting support method includes: a test action instruction step, for changing at least one value among the plurality of control parameters, so as to enable the motor control device to actually control multiple test actions, or controlling multiple test actions by utilizing the simulation of a hypothetical model of the motor control device; a parameter adjustment step, for setting whether to make the second control parameters, except the first control parameters of which the values are changed in the test actions, among the plurality of control parameters to change along with the first control parameters; and a performance index calculation step, for working out performance indexes of the control of the motor control device according to a result of the test actions.

The various forms of setting support devices of the invention may also be implemented by a computer, and at this point, the computer is adopted as every part (software element) of the setting support device to act. The computer for implement the setting support device, a control program of the setting support device and a computer-readable recording medium recording the program also belong to the scope of the invention.

[Effects of the Invention]

According to the invention, the test action is performed for multiple times by changing the values of the control parameters, and according to a result of the test action, performance indexes of the control of the motor control device are worked out. Here, the control parameters may be classified as the first control parameters and the second control parameters, and moreover, whether the second control parameters change along with the first control parameters or not may be set. That is, the test action may be executed under the condition that the second control parameters change along with the first control parameters or under the condition that the second control parameters do not change along with the first control parameters, so the variation of conditions of the test action may be increased. Therefore, the following effect is achieved: the respective setting of optimal values of a plurality of control parameters may be supported.

BRIEF DESCRIPTION OF THE DRAWINGS

Fig. 1 is a block diagram of simulation execution.
Fig. 2 is a block diagram which represents the structure of main parts when a servo driver 2 is actually driven to measure response.
Fig. 3 is a schematic diagram which represents a control system.
Fig. 4 is a diagram which represents the structure of main parts of the servo driver.
Fig. 5 is a block diagram which represents the structure of main parts of feedforward.
Fig. 6 is a flow diagram which represents a processing flow of setting control parameters for executing simulation.
Fig. 7 is a flow diagram which represents a processing flow of setting control parameters for performing real machine measurement.
Fig. 8A and Fig. 8B are diagrams which represent examples of result display when there is one changing control parameter, Fig. 8A is the diagram which represents an example displayed as a two-dimensional graph with a horizontal axis representing a control parameter and a longitudinal axis representing a performance index, and Fig. 8B is the diagram which represents an example displayed as a two-dimensional graph with a horizontal axis representing a control parameter and a left longitudinal axis and a right longitudinal axis respectively representing different performance indexes.
Fig. 9 is a diagram which is used to describe a combination example of a control parameter A, a performance index $\alpha$ and a performance index $\beta$.
Fig. 10A and Fig. 10B are diagrams which represent examples of result display when there are two changing control parameters, Fig. 10A is the diagram which represents the example of mapping display adopting a control parameter A as a horizontal axis and a control parameter B as a longitudinal axis and utilizing colors on a graph plane to represent a performance index, and Fig. 10B is the diagram which represents the example displayed as a three-dimensional graph adopting a control parameter A as an X axis, a control parameter B as a Y axis and a performance index as a Z axis.
Fig. 11 is a diagram which is used to describe a combination example of a control parameter A, a control parameter B and a performance index.
Fig. 12A and Fig. 12B are diagrams which represent examples of result display when there are three changing control parameters.
Fig. 13A and Fig. 13B are diagrams which represent examples of performance indexes in frequency response, Fig. 13A is the diagram which represents closed-loop characteristics, and Fig. 13B is the diagram which represents open-loop characteristics.
Fig. 14 is a diagram which represents an example of performance indexes in time response.
Fig. 15 is a diagram which represents a displayed image example on a display part 12.
Fig. 16A and Fig. 16B are diagrams which represent an example of display of a simulation result 1511, Fig. 16A is the diagram which represents a state of not setting notch filters, and Fig. 16B is the diagram which represents a state of having set the notch filters.
Fig. 17 is a diagram which represents an image example of manually setting gains and filter parameters.
Fig. 18A and Fig. 18B are diagrams which respectively represent a simulation result 1511 in the case that the value of cutoff frequency of a torque filter LPF is determined on the basis of values of other control parameters and set as a fixed value in the above-mentioned setting method for control parameters, Fig. 18A is the diagram which represents the case of being set as the fixed value, and Fig. 18B is the diagram which represents the case in which the value is determined on the basis of the value of speed proportional gain.

DESCRIPTION OF THE EMBODIMENTS

The present embodiment of the invention is described in detail hereinafter. A setting device 1 of the present embodiment adjusts and controls a servo driver 2. More specifically, the setting device 1 measures the response status of the servo driver 2, and moreover, the setting device 1 executes the simulation of the servo driver 2, presents the response status or simulation result of the servo driver 2 to a user, and receives the setting of control parameters (position gain, speed gain, cutoff frequency of a filter, etc.) for the servo driver 2 from the user. Furthermore, the servo driver 2 controls a motor 3 on the basis of the set control parameters.

Moreover, in the setting device 1 of the present embodiment, simulation or the driving of the servo driver 2 may be executed while values of a plurality of control parameters are changed, and moreover, performance indexes, such as frequency response and time response, may be presented to the user.

[Control System]

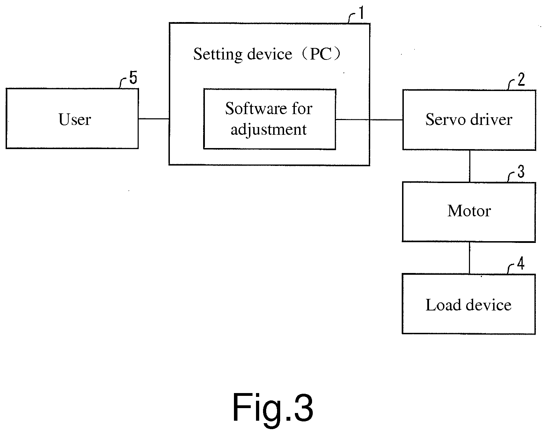

First of all, a control system of the present embodiment is described in reference to Fig. 3. Fig. 3 is a schematic diagram which represents the control system. The control system, which uses a servo mechanism to control the action of a load device 4, includes the setting device (setting support device) 1, the servo driver (motor control device) 2, the motor 3, and the load device 4, as shown in Fig. 3.

The setting device 1, which is a device for setting and adjusting control parameters of the servo driver 2, includes software for adjustment. More specifically, the setting device 1 uses the software for adjustment to adjust the control parameters (such as position gain, speed gain, cutoff frequency of the filter, etc.) of the servo driver 2, so that the response status of the servo driver 2 may be optimal. In addition, the software for adjustment has a function of measuring the response status of the servo driver 2 and a function of simulating the response of the servo driver 2. For example, the setting device 1 is implemented by means of a personal computer, and by executing the program (software for adjustment) stored in the personal computer, the computer exerts functions as the setting device 1.

The user (such as a user or a setter of the control system) 5 uses the setting device 1 to set and adjust the control parameters of the servo driver 2. That is, the user 5 uses the software for adjustment running on the setting device 1 to set and adjust the control parameters of the servo driver 2, so that the response status of the servo driver 2 may be optimal. In other words, an actual measurement result and simulation result are used to determine the response status, and the control parameters are adjusted.

The servo driver 2 stores the control parameters set and adjusted by the setting device 1, and drives the motor 3 according to the control parameters, so that the load device 4 may act. Moreover, the servo driver 2 may be in wired or wireless communication connection with the setting device 1 and the motor 3. For example, the servo driver 2 is connected to the setting device 1 through a universal serial bus (USB) cable. Furthermore, for example, the servo driver 2 is connected to the motor 3 through a special cable.

[Details of the Setting Device]

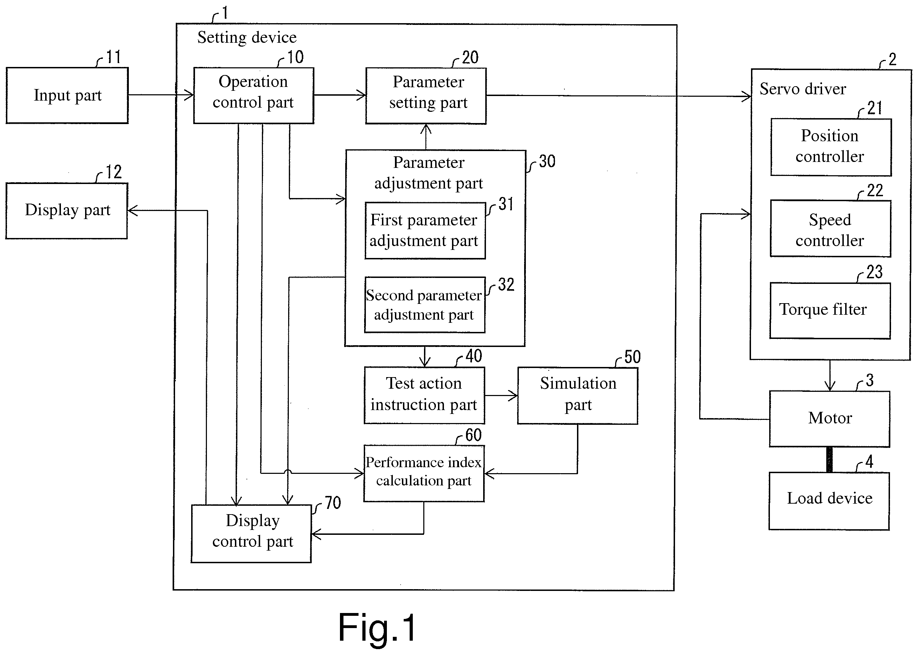

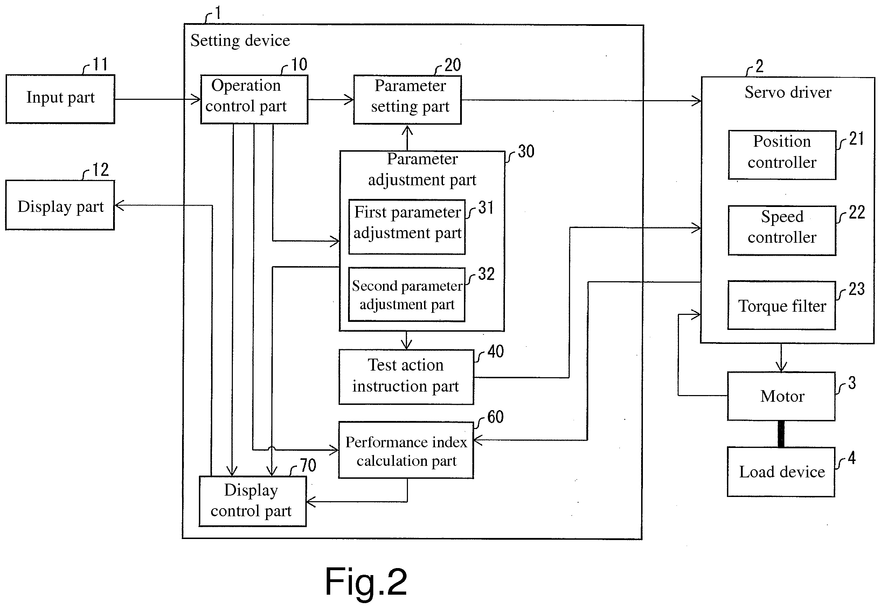

Next, in reference to Fig. 1 and Fig. 2, the details of the setting device 1 are described. Fig. 1 and Fig. 2 are block diagrams which represent the structure of main parts of the setting device 1. Fig. 1 is the block diagram of simulation execution, and Fig. 2 is the block diagram which represents the structure of the main parts when the servo driver 2 is actually driven to measure response.

As shown in Fig. 1, when the simulation of the servo driver 2 is executed, the setting device 1 includes an operation control part 10, a parameter setting part 20, a parameter adjustment part 30, a test action instruction part 40, a simulation part 50, a performance index calculation part 60, and a display control part 70.

Based on an instruction for the setting device 1 inputted by an input part 11, the operation control part 10 notifies a corresponding block of the content of the instruction. For example, when a setting instruction for the control parameters is received, the parameter setting part 20 is notified of the content of the setting instruction. Moreover, when an adjustment instruction for the control parameters is received, the parameter adjustment part 30 is notified of the intention of the adjustment instruction. Furthermore, when a calculation instruction for the performance indexes is received, the performance index calculation part 60 is notified of the intention of the calculation instruction. Moreover, when a display-related instruction is received, the display control part 70 is notified of the intention of the display-related instruction.

The parameter setting part 20 sets the control parameters notified by the operation control part 10 to the servo driver 2. Examples as the control parameters are listed as follows: position gain, speed gain, cutoff frequency of the filter, etc., as mentioned above. Moreover, as mentioned below, in the case that the servo driver 2 is of a structure using feedforward, as a control parameter, the gains of model tracking control parts may be set.

The parameter adjustment part 30, which adjusts parameters of simulation execution, includes a first parameter adjustment part 31 and a second parameter adjustment part 32.

The first parameter adjustment part 31 adjusts control parameters set as first control parameters among a plurality of control parameters. Examples as the control parameters set as the first control parameters are listed as follows: speed proportional gain, speed integral gain, position proportional gain and gains of the model tracking control parts.

In the case of setting the speed proportional gain and the speed integral gain as the first control parameters and the case of setting the speed proportional gain and the position proportional gain as the first control parameters, two control parameters which have great affection on the performance indexes may be set as the first control parameters, so the adjustment of each control parameter to achieve preferred performance indexes may be realized more easily.

The second parameter adjustment part 32 adjusts control parameters set as second control parameters among the plurality of control parameters. The second control parameters are control parameters set according to the values of the first control parameters or control parameters set as fixed values. Examples as the control parameters set as the second control parameters are listed as follows: speed integral gain, position proportional gain and gains of the model tracking control parts.

The test action instruction part 40 notifies the simulation part 50 of the following instruction: using the first parameters and the second parameters adjusted by the parameter adjustment part 30 to execute the simulation of the servo driver 2. That is, the test action instruction part 40 gives an instruction on using the first control parameters and the second control parameters to perform multiple test actions by simulation.

The simulation part 50 uses the first parameters and the second parameters notified by the test action instruction part 40 to execute the simulation of the servo driver 2.

The performance index calculation part 60 uses a result of simulation executed by the simulation part 50 to work out performance indexes (stability of control and response to configuration setting time, etc.).

The display control part 70 controls display on a display part 12.

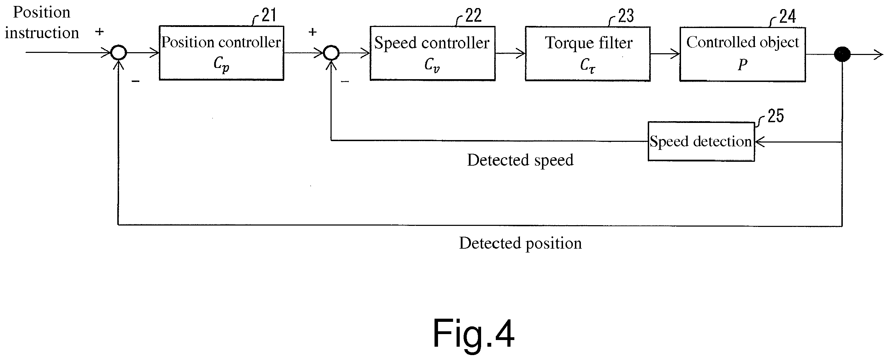

Furthermore, as shown in Fig. 1, the servo driver 2 includes a position controller 21, a speed controller 22, and a torque filter 23. In reference to Fig. 4, the processing contents of these controllers are described.

As shown in Fig. 4, for example, the position controller 21 performs proportion control (P control). More specifically, by multiplying a deviation (i.e. positional deviation) between a position instruction notified by an action instruction part 24 and a detected position by a frequency transfer function $C_p$ of the position controller, instruction speed is output. In addition, the position controller 21 is set by the parameter setting part 20, and therefore the position proportional gain $K_{pp}$ is set as the frequency transfer function $C_p$ in advance. That is, the frequency transfer function $C_p$ is a function as a constant.

For example, the speed controller 22 performs proportion control (P control). More specifically, by multiplying a deviation (i.e. speed deviation) between the instruction speed output by the position controller 21 and detected speed (measured speed value) by a frequency transfer function $C_v$ of the speed controller, instruction torque is output. Here, the speed controller 22 is set by the parameter setting part 20, and therefore the speed proportional gain $K_{vp}$ is set as the frequency transfer function $C_v$ in advance. In addition, the speed controller 22 may also perform proportion integration (PI) control, rather than proportion control (P control). At this point, the speed controller 22 depends on the parameter setting part 20 to set the speed proportional gain $K_{vp}$ and the speed integral gain $K_{vi}$, and thereby $K_{vp} \times (1+K_{vi}/2)$ (function of positive (plus) operator s) is set as the frequency transfer function.

The torque filter 23 controls the motor 3 on the basis of the instruction torque output by the speed controller 22, so that the load device 4 acts. The torque filter 23 includes a torque instruction filter (primary low-pass filter) and a plurality of notch filters, and there are cutoff frequency of the torque instruction filter, central frequency of the notch filters, depth and width as control parameters.

Next, in reference to Fig. 2, the structure (also called real machine measurement below) of setting control parameters adjusted by the parameter adjustment part 30 for the servo driver 2 and working out performance indexes according to a measured response result, rather than simulation, is described. In real machine measurement, the difference from the case of Fig. 1 is that there is no simulation part 50, and the performance index calculation part 60 uses a measured result of the servo driver 2 to work out performance indexes. In real machine measurement, the result is measured by the actual driving of the servo driver 2 rather than simulation, so the simulation part 50 is not needed.

Moreover, the test action instruction part 40 gives an instruction on actually driving the servo driver 2 by using the first control parameters and the second control parameters to perform multiple test actions.

[Modified Embodiment]

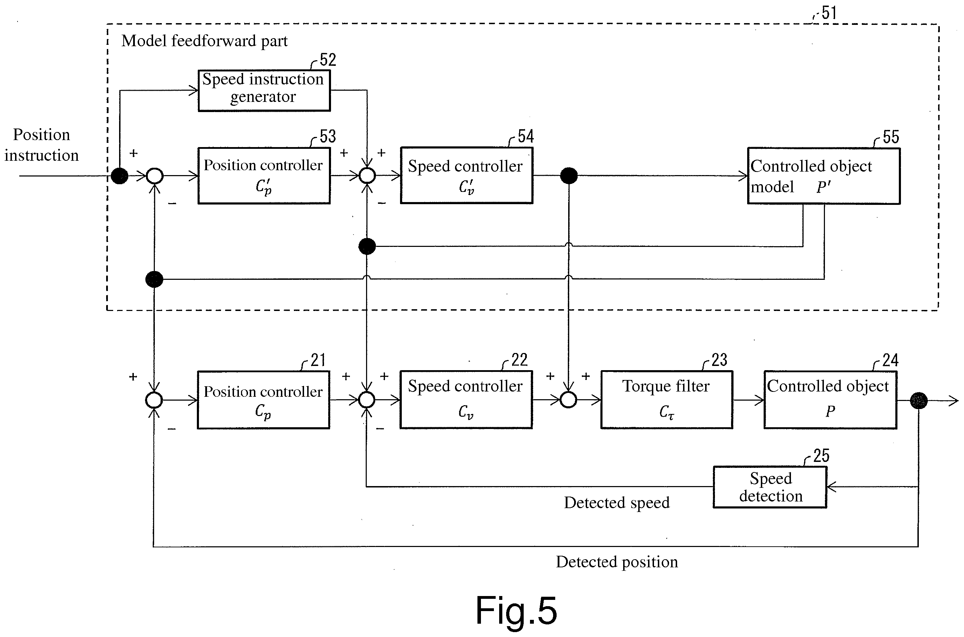

In addition, the servo driver 2 may also be of a structure using feedforward. In reference to Fig. 5, the structure of the servo driver 2 including feedforward is described. Fig. 5 is a block diagram which represents the structure of main parts of feedforward. As shown in Fig. 5, a model feedforward part 51 includes a speed instruction generator 52, a position controller (control parameter $C'_p$) 53, a speed controller (control parameter $C'_v$) 54, and a controlled object model (control parameter p') 55.

The model feedforward part 51 executes the feedforward of model tracking control, controls model output position, model output speed and model output torque as target values of position, speed and torque of the motor 3, and has the gains of the model tracking control parts (position controller 53 and speed controller 54) as control parameters.

The speed instruction generator 52 receives a position instruction coming from the outside, and generates a speed instruction. Furthermore, the generated speed instruction is output to the speed controller 54.

The position controller 53 receives a model output position generated by the position instruction, and generates a model speed control instruction to control the model output position to follow the position instruction. Moreover, the generated model speed control instruction is output to the speed controller 54.

The speed controller 54 receives the model speed control instruction generated by the position controller 53, the speed instruction generated by the speed instruction generator 52 and the model output speed generated by the controlled object model 55, and generates a model torque control instruction to control the model output speed to follow the model speed control instruction and the speed instruction. Moreover, the generated model torque control instruction is output to the controlled object model 55.

The controlled object model 55 receives the model torque control instruction output by the speed controller 54, and generates and outputs a model output position and model output speed.

[Processing Flow]

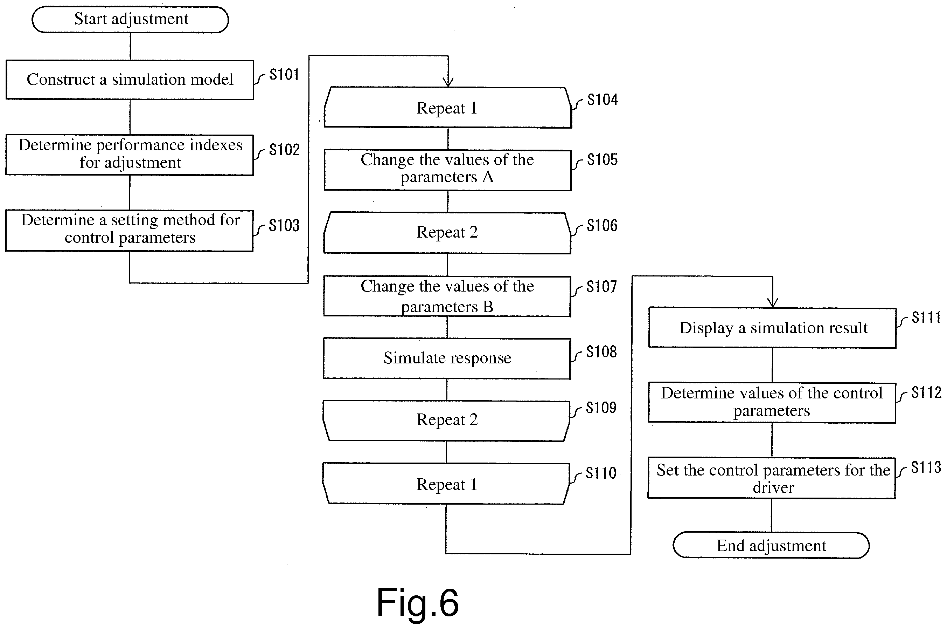

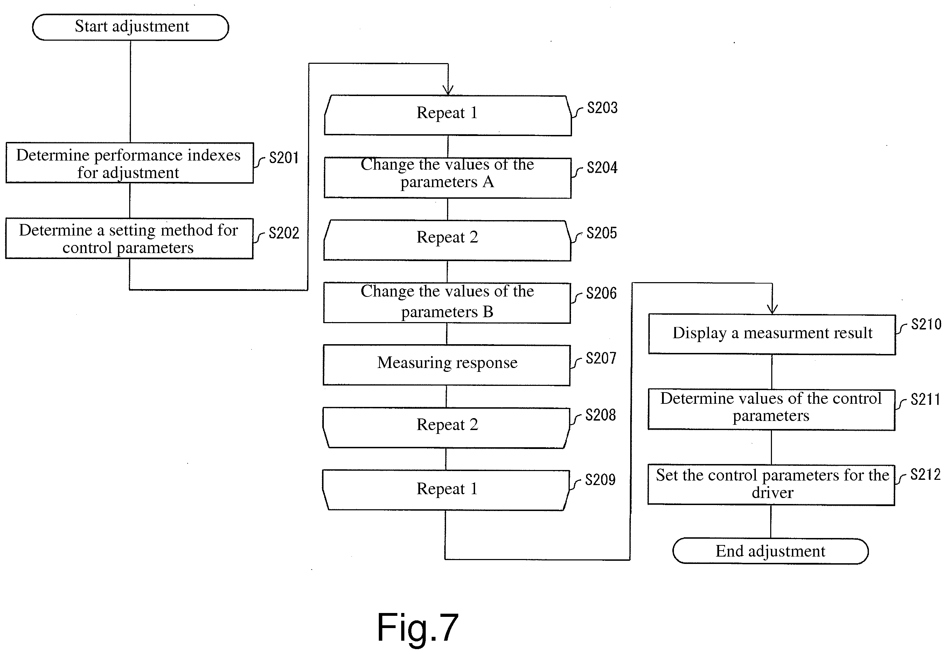

Next, in reference to Fig. 6 and Fig. 7, processing flows of setting control parameters are described. Fig. 6 is a flow diagram which represents the processing flow of setting control parameters for executing simulation, and Fig. 7 is a flow diagram which represents the processing flow of setting control parameters for performing real machine measurement.

[Case of using simulation]

First of all, in reference to Fig. 6, the processing flow of setting control parameters for executing simulation is described.

In the setting device 1, when an instruction for starting the adjustment of the control parameters is received, the simulation part 50 first constructs a simulation model (S101). For example, the simulation model is constructed by the following methods. (1) Constructing the simulation model according to measured data obtained by driving a real device. (2) Constructing the simulation model according to a physical model of the load device. The values of parameters (such as inertia, friction, rigidity and etc.) in the physical model are determined by using the identifying operation of the measured data obtained by driving the real device or the input of the user.

Next, performance indexes for adjustment are determined (S102). In addition, the so-called performance indexes mean those for response evaluation. The performance indexes not only may be determined by receiving specifications of the user, but also may be determined automatically in the simulation part 50. In addition, examples as the performance indexes are listed as follows: setting time, peak gain, etc.

Next, a setting method for the control parameters is determined (S103). More specifically, for each control parameter to be adjusted, which of the following methods is utilized to set values is determined. (1) Changing values when simulation is performed. (2) Determining values on the basis of values of the other control parameters. (3) Setting values as fixed values. In addition, there must be two control parameters determined by utilizing the method (1) in the case that a result is displayed as "three-dimensional graph" or "mapping display", and there must be one control parameter in the case of "two-dimensional graph".

Moreover, an example as the setting method (2) of determining values on the basis of values of the other control parameters is taken below. When the values of the position proportional gain $K_{pp}$, the speed integral gain $K_{vi}$ and the cutoff frequency $f_{tf}$ of the torque filter LPF (low-pass filter) are determined on the basis of the value of the speed proportional gain $K_{vp}$, the following defined relational expressions may be used to determine the values of the control parameters.

$$K_{pp}=f_1(K_{vp})=K_{vp}/4$$

$$K_{vi}=f_2(K_{vp})=K_{vp}/4$$

$$f_{tf}=f_3(K_{vp})=5K_{vp}$$

Moreover, when the response of an evaluated object is set as response to position control, the setting method (1) may be utilized to determine the position proportional gain $K_{pp}$ and the speed proportion gain $K_{vp}$, and the setting method (2) or (3) may be utilized to determine the speed integral gain $K_{vi}$ and the cutoff frequency $f_{tf}$ of the torque filter LPF.

Furthermore, when the response of the evaluated object is set as response to speed control, the setting method (1) may be utilized to determine the speed proportional gain $K_{vp}$ and the speed integral gain $K_{vi}$, and the setting method (2) or (3) may be utilized to determine the cutoff frequency $f_{tf}$ of the torque filter LPF.

In addition, the setting method (2) of determining values on the basis of values of the other control parameters may also be selected according to whether responsibility or stability is emphasized (mode selection).

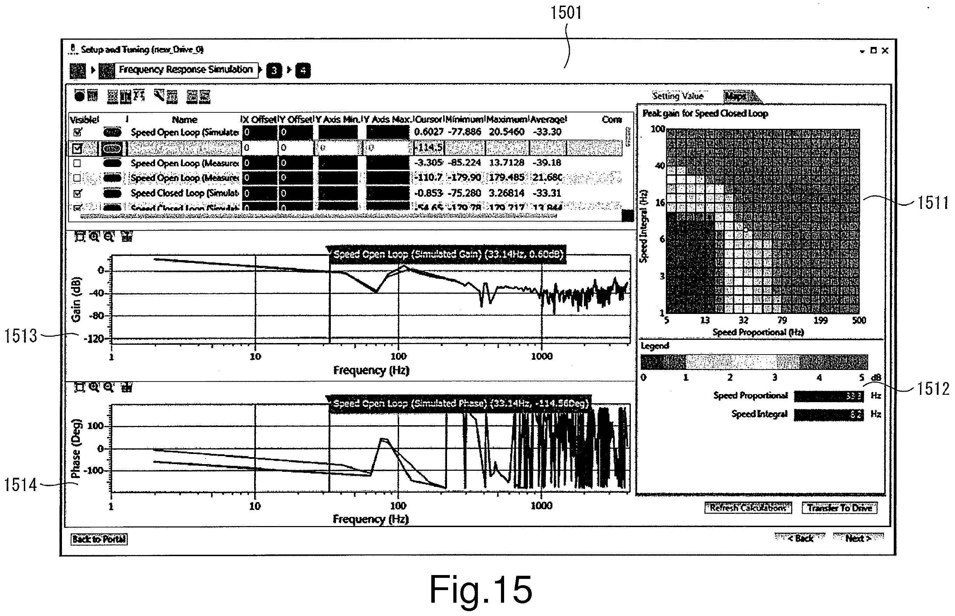

Moreover, a specification for the resolution of a matrix (described in detail hereinafter, and corresponding to a simulation result 1511 of Fig. 15) displaying a simulation result may also be received, or the setting of ranges (maximum value and minimum value) of a longitudinal axis and a horizontal axis may also be received. The resolution of the matrix or the ranges of the longitudinal axis and the horizontal axis may be set by the user, and thereby an expected simulation result may be further presented to the user.

Next, if values are determined by the setting method (1) in Step S103, then the values of the determined control parameters (i.e. the parameter A (first parameter) and the parameter B (second parameter)) are changed, and at the same time, simulation is executed (S104-S110).

For example, when the control parameters which are determined by utilizing the setting method (1) are the position proportional gain $K_{pp}$ and the speed proportional gain $K_{vp}$ and the control parameters which are determined by utilizing the method (2) are the speed integral gain $K_{vi}$ and the cutoff frequency $f_{tf}$ of the torque filter LPF, simulation is executed as the values of the control parameters are changed in sequence in the following way.

(a) The position proportional gain $K_{pp}$ as the control parameter determined by utilizing the setting method (1) is changed according to $K_{pp}=K_{pp}[0], K_{pp}[1], ..., K_{pp}[M-1]$.
(b) The speed proportional gain $K_{vp}$ as the control parameter determined by utilizing the setting method (1) is changed according to $K_{vp}=K_{vp}[0], K_{vp}[1], ..., K_{vp}[N-1]$.
(c) The speed integral gain $K_{vi}$ and the cutoff frequency $f_{tf}$ of the torque filter LPF as the control parameters determined by utilizing the setting method (2) are obtained according to $K_{vp}$.

Here, a two-dimensional array for recording performance indexes obtained by simulation is set as result [M][N].

FOR m=0 to M-1 DO

$K_{pp}=K_{pp}[m]$

FOR n=0 to N-1 DO

$K_{vp}=K_{vp}[n]$

$K_{vi}=f_2(K_{vp})$

$f_{tf}=f_3(K_{vp})$

Using the control parameters $K_{pp}, K_{vp}, K_{vi}$ and $f_{tf}$ to execute simulation

Recording performance indexes obtained by simulation into result [m][n]

ENDFOR

ENDFOR

Next, in Step S111, a performance index calculation result (array result) is displayed. In addition, the displayed details will be described hereinafter.

Next, in Step S112, the values of the control parameters are determined. This is determined by the combination of the control parameters capable of obtaining ideal performance which is specified by the user on the basis of the displayed performance index calculation result.

Finally, in Step S113, the determined control parameters are set to the servo driver 2.

What has been mentioned above is the processing flow of setting control parameters for executing simulation.

[Case of Using Real Machine Measurement]

Next, in reference to Fig. 7, the processing flow of setting control parameters for performing real machine measurement is described.

In the case of real machine measurement, a simulation model does not need to be constructed, and first of all, performance indexes for adjustment are determined (S201). The so-called performance indexes mean those for response evaluation. Like the case of using simulation, the performance indexes not only may be determined by receiving specifications of the user, but also may be determined automatically in the simulation part 50. In addition, examples as the performance indexes are listed as follows: setting time, peak gain, etc.

Next, a setting method for the control parameters is determined (S202). The details of determining the setting method for the control parameters are the same as that of the case of using simulation.

Next, if values are determined by the setting method (1) in Step S202, then the values of the determined control parameters (i.e. the parameter A (first parameter) and the parameter B (second parameter)) are changed, and at the same time, simulation is executed (S203-S209).

For example, when the control parameters which are determined by utilizing the setting method (1) are the position proportional gain $K_{pp}$ and the speed proportional gain $K_{vp}$ and the control parameters which are determined by utilizing the method (2) are the speed integral gain $K_{vi}$ and the cutoff frequency $f_{tf}$ of the torque filter LPF, the motor 3 is driven to perform measurement and the calculation of the performance indexes as the values of the control parameters are changed in sequence in the following way and set to the servo driver 2.

(a) The position proportional gain $K_{pp}$ as the control parameter determined by utilizing the setting method (1) is changed according to $K_{pp}=K_{pp}[0]$, $K_{pp}[1]$, ..., $K_{pp}[M-1]$.
(b) The speed proportional gain $K_{vp}$ as the control parameter determined by utilizing the setting method (1) is changed according to $K_{vp}=K_{vp}[0]$, $K_{vp}[1]$, ..., $K_{vp}[N-1]$.
(c) The speed integral gain $K_{vi}$ and the cutoff frequency $f_{tf}$ of the torque filter LPF as the control parameters determined by utilizing the setting method (2) are obtained according to $K_{vp}$.

Here, a two-dimensional array for recording performance indexes obtained by simulation is set as result [M][N].

$$\text{FOR } m=0 \text{ to } M\text{-}1 \text{ DO}$$

$$K_{pp}=K_{pp}[m]$$

$$\text{FOR } n=0 \text{ to } N\text{-}1 \text{ DO}$$

$$K_{vp}=K_{vp}[n]$$

$$K_{vi}=f_2(K_{vp})$$

$$f_{tf}=f_3(K_{vp})$$

Setting the control parameters $K_{pp}$, $K_{vp}$, $K_{vi}$ and $f_{tf}$ to the servo driver 2

Making the motor 3 act to measure response

Recording performance indexes obtained according to measured data into

result [m][n]

ENDFOR

ENDFOR

Next, in Step S210, a performance index calculation result (array result) is displayed. In addition, the displayed details will be described hereinafter.

Next, in Step S211, the values of the control parameters are determined. This is determined by the combination of the control parameters capable of obtaining ideal performance which is specified by the user on the basis of the displayed performance index calculation result.

Finally, in Step S212, the determined control parameters are set to the servo driver 2.

What has been mentioned above is the processing flow of setting control parameters for executing simulation.

[Displaying Methods]

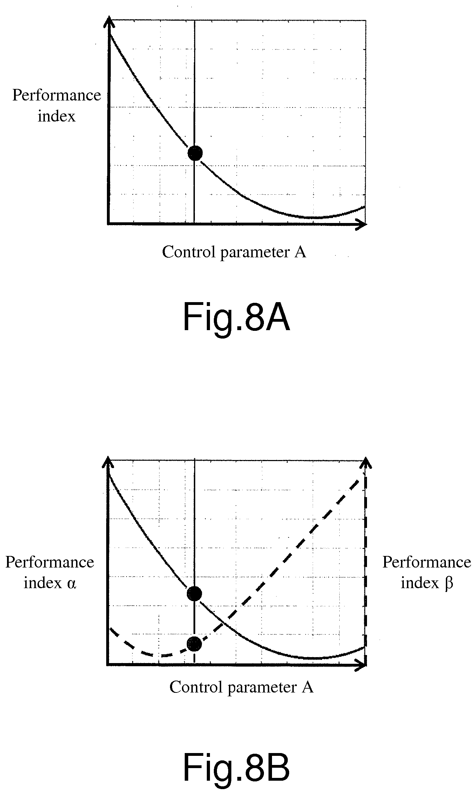

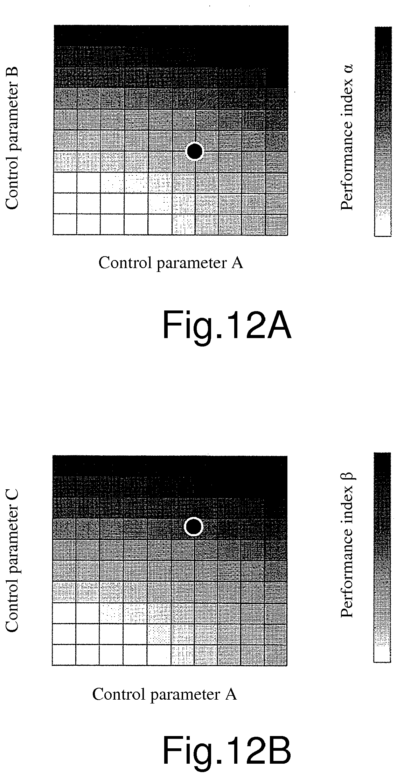

Next, in reference to Fig. 8A and Fig. 8B to Fig. 12A and Fig. 12B, displaying methods for a simulation result or a real machine measurement result are described. The simulation result or the real machine measurement result is displayed by the relation between changes of displayed control parameters and current performance indexes.

In addition, when not needing to be differentiated, the display of the simulation result and the display of the real machine measurement result are called "result display" for short below.

[Case of One Changing Control Parameter]

First of all, in reference to Fig. 8A and Fig. 8B, the method of result display when there is one changing control parameter is described. Fig. 8A and Fig. 8B are diagrams which represent examples of result display when there is one changing control parameter, Fig. 8A is the diagram which represents an example displayed as a two-dimensional graph with a horizontal axis representing a control parameter and a longitudinal axis representing a performance index, and Fig. 8B is the diagram which represents an example displayed as a two-dimensional graph with a horizontal axis representing a control parameter and a left longitudinal axis and a right longitudinal axis respectively representing different performance indexes.

When result display is performed with the two-dimensional graph shown in Fig. 8A, that is, when result display is performed with the two-dimensional graph adopting a control parameter A as the horizontal axis and a performance index as the longitudinal axis, the relation between both is represented by a curve or a broken line. The black dot in Fig. 8A represents the value of the control parameter in current setting. Moreover, by specifying coordinates in the two-dimensional graph, the value of the control parameter A may be set. Coordinates not only may be specified by directly touching a display surface or the like, but also may be specified by using a mouse or the like to move a pointer and clicking.

That is, according to a coordinate position received by the input part 11 for the two-dimensional graph displayed on the display part 12 by the display control part 70, the parameter adjustment part 30 sets a first control parameter (control parameter A), and sets a second control parameter according to the set first control parameter, and the simulation part 50 uses the newly set first control parameter and second control parameter to execute simulation.

Furthermore, when result display is performed with the two-dimensional graph shown in Fig. 8B, that is, when result display is performed with the two-dimensional graph in which a control parameter A is adopted as the horizontal axis, the longitudinal axes are divided into the left longitudinal axis and the right longitudinal axis, the left longitudinal axis adopts a performance index $\alpha$ and the right longitudinal axis adopts a performance index $\beta$, the relations between the control parameter A and both the performance index $\alpha$ and the performance index $\beta$ are also represented by curves or broken lines. Since there are two performance indexes, $\alpha$ and $\beta$, two curves (broken lines) are displayed. If two longitudinal axes are set like this, then two types of performance indexes may be displayed.

Moreover, in Fig. 8A and Fig. 8B, an acceptance line may also be set for the performance indexes, and the acceptance line is displayed.

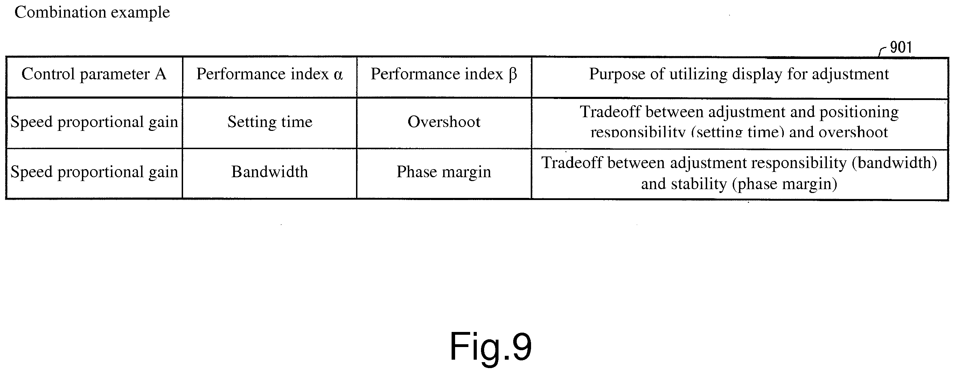

Next, in reference to Fig. 9, a combination example of the control parameter A, the performance index $\alpha$ and the performance index $\beta$ is described. Fig. 9 is a diagram which is used to describe the combination example of the control parameter A, the performance index $\alpha$ and the performance index $\beta$.

As shown in Fig. 9, "speed proportional gain" may be set as the control parameter A, "setting time" may be set as the performance index $\alpha$, and "overshoot" may be set as the performance index $\beta$. At this point, both positioning response (setting time) and overshoot in a tradeoff relation may be adjusted.

Furthermore, "speed proportional gain" may be set as the control parameter A, "bandwidth" may be set as the performance index $\alpha$, and "phase margin" may be set as the performance index $\beta$. At this point, both responsibility (bandwidth) and stability (phase margin) in a tradeoff relation may be adjusted.

In addition, as shown in Fig. 8A, in the case that there is one displayable performance index, any one performance index among the above-mentioned performance index $\alpha$ and performance index $\beta$ may be set to be displayed.

[Case of Two Changing Control Parameters]

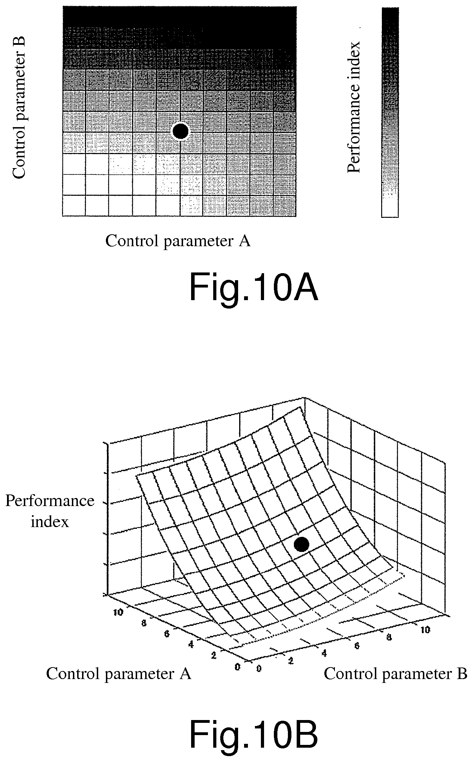

Next, in reference to Fig. 10A and Fig. 10B, the method of result display when there are two changing control parameters is described. Fig. 10A and Fig. 10B are diagrams which represent examples of result display when there are two changing control parameters, Fig. 10A is the diagram which represents the example of mapping display adopting a control parameter A as a horizontal axis and a control parameter B as a longitudinal axis and utilizing colors on a graph plane to represent a performance index, and Fig. 10B is the diagram which represents the example displayed as a three-dimensional graph adopting a control parameter A as an X axis, a control parameter B as a Y axis and a performance index as a Z axis.

When mapping display shown in Fig. 10A is utilized to perform result display, that is, when the control parameter A is adopted as the horizontal axis, the control parameter B is adopted as the longitudinal axis and the performance index is displayed by changing colors on the graph plane, the performance index relative to the control parameter A and the control parameter B will be represented by utilizing a color at corresponding coordinates. Moreover, the black dot in Fig. 10A represents the control parameters in current setting. Furthermore, the values of the control parameter A and the control parameter B may be set by specifying coordinates in mapping display.

Moreover, when result display is performed with the three-dimensional graph shown in Fig. 10B, that is, when result display is performed with the three-dimensional graph adopting a control parameter A as an X axis, a control parameter B as a Y axis and a performance index as a Z axis, the relation between the three is represented by a curved surface. The case of the three-dimensional graph shown in Fig. 10B is also the same as the case of Fig. 10A, the black dot in the graph represents current values of the control parameter A and the control parameter B, and the values of the control parameter A and the control parameter B may be set by specifying coordinates in the graph.

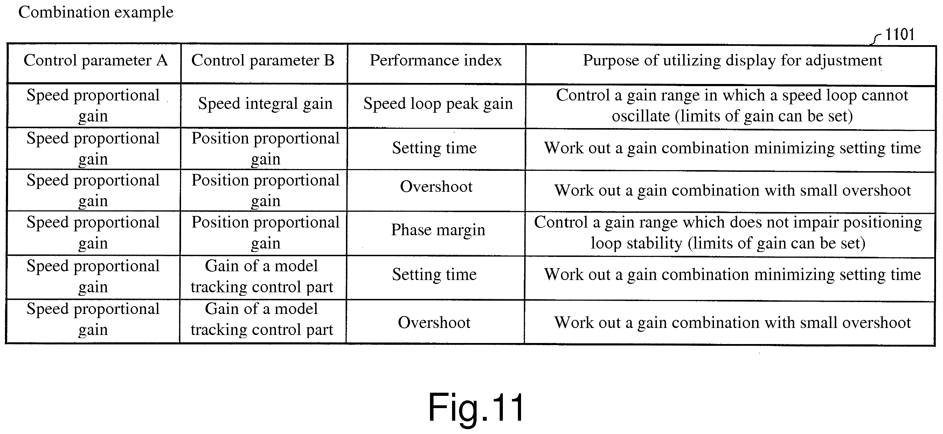

Next, in reference to Fig. 11, a combination example of the control parameter A, the control parameter B and the performance index is described. Fig. 11 is a diagram which is used to describe the combination example of the control parameter A, the control parameter B and the performance index.

As shown in Fig. 11, "speed proportional gain" may be set as the control parameter A, "speed integral gain" may be set as the control parameter B, and "speed loop peak gain" may be set as the performance index. At this point, the user may be enabled to find out a gain range in which a speed loop does not oscillate (gain limits may be set).

Furthermore, "speed proportional gain" may be set as the control parameter A, "position proportional gain" may be set as the control parameter B, and "setting time" may be set as the performance index. At this point, the user may be enabled to find out a gain combination minimizing setting time.

Moreover, "speed proportional gain" may be set as the control parameter A, "position proportional gain" may be set as the control parameter B, and "overshoot" may be set as the performance index. At this point, the user may be enabled to find out a gain combination with small overshoot.

Furthermore, "speed proportional gain" may be set as the control parameter A, "position proportional gain" may be set as the control parameter B, and "phase margin" may be set as the performance index. At this point, the user may be enabled to find out a gain range which does not impair position loop stability (gain limits may be set).

Moreover, "speed proportional gain" may be set as the control parameter A, "gain of the model tracking control part" may be set as the control parameter B, and "setting time" may be set as the performance index. At this point, the user may be enabled to find out a gain combination minimizing setting time.

Moreover, "speed proportional gain" may be set as the control parameter A, "gain of the model tracking control part" may be set as the control parameter B, and "overshoot" may be set as the performance index. At this point, the user may be enabled to find out a gain combination with small overshoot.

[Case of Three Changing Control Parameters]

Next, in reference to Fig. 12A and Fig. 12B, the method of result display when there are three changing control parameters is described. Fig. 12A and Fig. 12B are diagrams which represent examples of result display when there are three changing control parameters.

When there are three changing control parameters, two mapping displays shown in Fig. 10A are used to perform result display. In the first mapping display (Fig. 12A, map A), a control parameter A is adopted as a horizontal axis, a control parameter B is adopted as a longitudinal axis, those represented by colors are set as a performance index α; and in the second mapping display (Fig. 12B, map B), a control parameter A is adopted as a horizontal axis, a control parameter C is adopted as a longitudinal axis, and those represented by colors are set as a performance index β.

When the performance index α needs to be verified, the map A is used, and the control parameter B uses a current value. In addition, under the condition that the control parameter B is changed, the color display of the performance index α in the map A will be portrayed again.

Furthermore, when the performance index β needs to be verified, the map B is used, and the control parameter C uses a current value. In addition, under the condition that the control parameter C is changed, the color display of the performance index β in the map B will be portrayed again.

As long as the map A and the map B are configured longitudinally in a way that the horizontal axes of the map A and the map B are consistent, the corresponding relation between the two maps may be recognized easily.

The black dots in Fig. 12A and Fig. 12B represent current values of the control parameter A, the control parameter B and the control parameter C. The value of the control parameter A is shared.

Furthermore, like the above-mentioned display example, the control parameter A, the control parameter B and the control parameter C may be set by specifying coordinates on display.

In addition, the combination example of the control parameter A, the control parameter B, the performance index $\alpha$ and the performance index $\beta$ is the same as that of the above-mentioned example.

In addition, in the above-mentioned embodiment, the example when there are three changing control parameters and there are two changing control parameters is described, but the number of changing control parameters and the number of obtained performance indexes are not limited. The number of changing control parameters may also be four or more than four, and the number of obtained performance indexes may also be three or more than three. At this point, each time when the number of performance indexes is increased, the number of mapping displays is increased, and each time when the number of combinations of changing control parameters is increased, the number of mapping displays is increased.

[Examples of Performance Indexes]

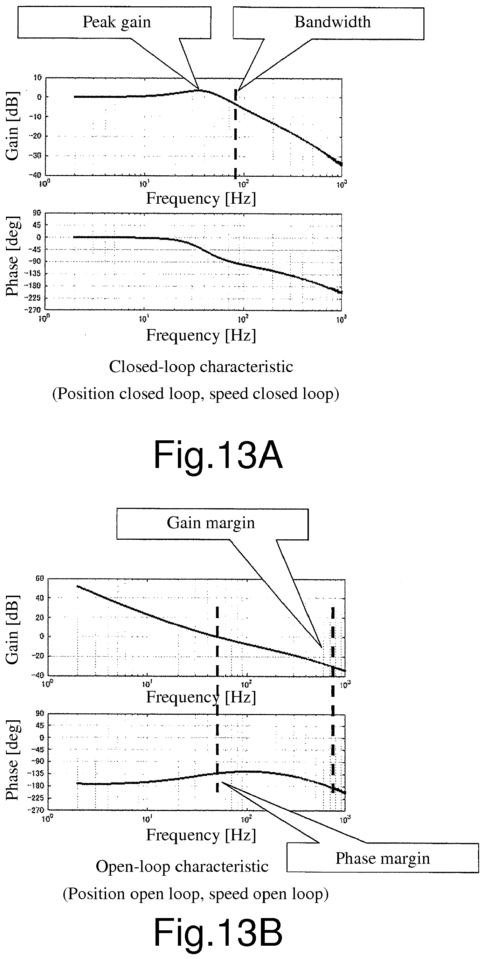

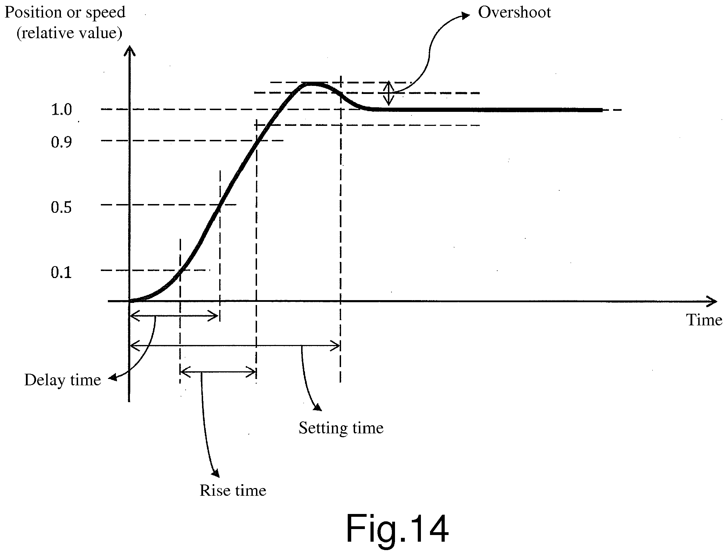

Next, in reference to Fig. 13A, Fig. 13B and Fig. 14, examples of performance indexes are described. Fig. 13A and Fig. 13B are diagrams which represent examples of performance indexes in frequency response, Fig. 13A is the diagram which represents closed-loop characteristics, and Fig. 13B is the diagram which represents open-loop characteristics.

Fig. 13A represents the closed-loop characteristics (position closed loop and speed closed loop). As shown in Fig. 13A, in the closed-loop characteristics, peak gain and bandwidth may become performance indexes.

Fig. 13B represents the open-loop characteristics (position open loop and speed open loop). As shown in Fig. 13B, in the open-loop characteristics, gain margin and phase margin may become performance indexes.

Fig. 14 is a diagram which represents an example of performance indexes in time response. As shown in Fig. 14, in time response, "delay time", "rise time", "setting time" and "overshoot" may become performance indexes.

[Image Example]

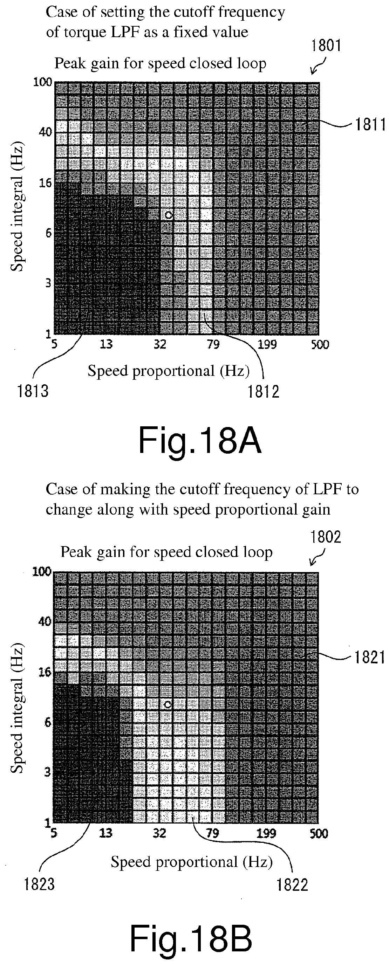

Next, in reference to Fig. 15 to Fig. 18A and Fig. 18B, image examples in the setting device 1 are described. Fig. 15 is a diagram which represents a displayed image example in the display part 12.

In the image example 1501 shown in Fig. 15, a simulation result 1511 is displayed in the form of a matrix on the upper right part. Here, "speed proportional gain" is adopted as a horizontal axis, "speed integral gain" is adopted as a longitudinal axis, and a performance index (peak gain) is represented by colors on the graph. In correspondence to the above-mentioned map displays, it may be known that the closer to the upper right of the matrix it is, the higher the peak gain is (more unstable and more oscillatory). Moreover, the white dot near the center of the matrix represents a current value of the control parameter.

Furthermore, as mentioned above, by specifying the coordinates on the matrix, the control parameter A and the control parameter B which correspond to the specified coordinates are set. Here, for example, by specifying a light-colored place and coordinates at the upper right (high peak gain), high-response and non-oscillation control parameters may be set.

Moreover, current values of the control parameters are displayed in an area 1512. Further, characteristics of frequency response (Bode line graph) are displayed in an area 1513 and an area 1514.

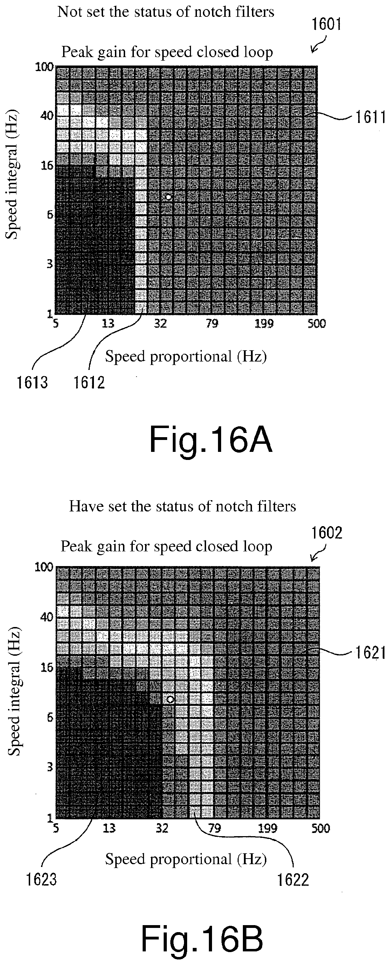

Fig. 16A and Fig. 16B are diagrams which represent an example of display of a simulation result 1511, Fig. 16A is the diagram which represents a state of not setting the notch filters, and Fig. 16B is the diagram which represents a state of having set the notch filters.

In Fig. 16A, the peak gain is high in the part of area 1611, the peak gain is low in the part of area 1613, and the part of area 1612 represents that the peak gain is medium.

Moreover, it may be known from Fig. 16A that under the condition of not setting the notch filters, the area with high peak gain is large, so it is hard to adjust the speed proportional gain (horizontal axis) to be above a certain level. This is because the mechanical resonance of a load machine may be caused.

In Fig. 16B, the peak gain is high in the part of area 1621, the peak gain is low in the part of area 1623, and the part of area 1622 represents that the peak gain is medium.

It may be known from Fig. 16B that under the condition of having set the notch filters, in comparison with Fig. 16A, the area with high peak gain becomes small. This is because the affection of mechanical resonance is inhibited by the notch filters. Thus, the range of the settable speed proportional gain is broadened.

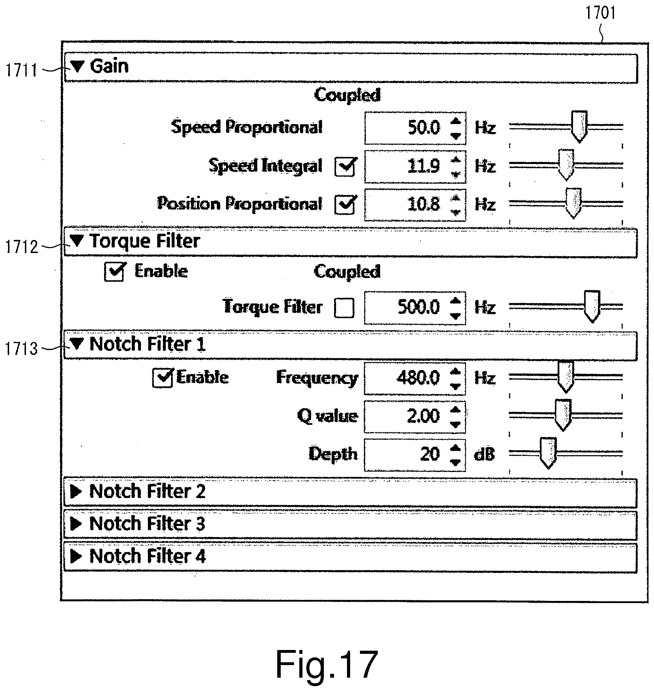

Fig. 17 is a diagram which represents an image example of manually setting gains and filter parameters. In the image example 1701 shown in Fig. 17, a gain setting area 1711 for setting gains, a torque filter area 1712 for setting a control parameter of the torque filter and a notch filter area 1713 for setting control parameters of the notch filters are displayed. In these setting areas, the gains or the filter parameters may be set. In addition, for "Enable" in the torque filter area 1712 and the notch filter area 1713, whether the filters are applied or not may be set according to whether the check boxes in the areas are selected or not.

Fig. 18A and Fig. 18B are diagrams which respectively represent a simulation result 1511 in the case that the value of cutoff frequency of the torque filter LPF is determined on the basis of values of other control parameters and set as a fixed value in the above-mentioned setting method for control parameters, Fig. 18A is the diagram which represents the case of being set as the fixed value, and Fig. 18B is the diagram which represents the case in which the value is determined on the basis of the value of speed proportional gain.

In Fig. 18A, the peak gain is high in the part of area 1811, the peak gain is low in the part of area 1813, and the part of area 1812 represents that the peak gain is medium.

Moreover, in Fig. 18B, the peak gain is high in the part of area 1821, the peak gain is low in the part of area 1823, and the part of area 1822 represents that the peak gain is medium.

It may be known from Fig. 18A and Fig. 18B that the acceptable range of the speed proportional gain is broadened in the practice of determining the value of the cutoff frequency of the torque filter LPF on the basis of the value of the speed proportional gain to perform simulation in comparison with the case of setting the cutoff frequency of the torque filter LPF as a fixed value.

[Example Implemented by means of Software]

The control blocks (especially the operation control part 10, the parameter setting part 20, the parameter adjustment part (the first parameter adjustment part 31 and the second parameter adjustment part 32) 30, the test action instruction part 40, the simulation part 50, the performance index calculation part 60 and the display control part 70) of the setting device 1 not only may be implemented by logic circuits (hardware) formed on integrated circuits (IC chips) and the like, but also may be implemented by software by using a central processing unit (CPU).

In the case of the latter, the setting device 1 is provided with a CPU for executing commands of a program as software for implementing every function, a read-only memory (ROM) or a storage unit (called "recording medium") readable by a computer (or the CPU) and recording the program and various data, a random access memory (RAM) for deploying the program, etc. Moreover, the computer (or the CPU) reads and executes the program from the recording medium to achieve the purpose of the invention. As the recording medium, a "non-temporary tangible medium" may be used, for example, a tape, a disk, a card, a semiconductor memory, a programmable logic circuit and the like may be used. Furthermore, the program may also be provided for the computer by any transmission medium (communication network or broadcast waves) capable of transmitting the program. In addition, the invention may also be implemented in the form of data signals which instantiate the program by electronic transmission and are embedded in carriers.

**Claims**

1. A setting support device (1), supporting the setting of a plurality of control parameters (A, B, C, P', $C'_p$, $C'_v$) used in control processing in a motor control device (2), and the setting support device (1) comprising:

   a test action instruction part (24), changing at least one value among the plurality of control parameters (A, B, C, P', $C'_p$, $C'_v$), so as to enable the motor control device (2) to actually control multiple test actions, or controlling multiple test actions by utilizing the simulation of a hypothetical model of the motor control device, wherein the plurality of control parameters comprise first control parameters and second control parameters;

   a parameter adjustment part (30), setting whether to make the second control parameters, except the first control parameters of which the values are changed in the test actions, among the plurality of control parameters (A, B, C, P', $C'_p$, $C'_v$) to change along with the first control parameters based on whether the second control parameters affect the first control parameters; and

   a performance index calculation part (60), working out performance indexes of the control of the motor control device (2) according to a result of the test actions; the setting support device (1) being **characterized in** further comprising:

      a display control part (70), controlling display by correlating the performance indexes worked out by the performance index calculation part (60) with the values of the first control parameters, wherein

      the display control part (70) controls the display of relational graphs, wherein the relational graphs represent the relations between values of the performance indexes and the m types of first control parameters; and when the performance indexes are correlated with the n types of first control parameters, the display control part (70) controls the simultaneous or selective display of relational graphs for each of m combinations selected from n combinations, wherein m is an integer greater than 2, and n is an integer meeting n ≧ m.

2.  The setting support device (1) according to claim 1, wherein
    the parameter adjustment part (30) sets the second control parameters to change along with the first control parameters or as any fixed values.

3.  The setting support device (1) according to any one of claims 1-2, wherein
    the control parameters (A, B, C, P', $C'_p$, $C'_v$) are control parameters of a controller composing a feedback control system in the motor control device (2).

4.  The setting support device (1) according to claim 3, wherein
    the first control parameters include the speed proportional gain of a speed controller (22, 54) composing the feedback control system.

5.  The setting support device (1) according to claim 4, wherein
    the second control parameters include the cutoff frequency of a torque filter (23) composing the feedback control system.

6.  The setting support device (1) according to claim 3, wherein
    the motor control device (2) comprises a feedforward control part, wherein the feedforward control part outputs, based on the hypothetical model of the motor control device (2), at least one of model position, model speed and model torque as target values of the position, speed and torque of a motor (3); and
    the control parameters (A, B, C, P', $C'_p$, $C'_v$) further include control parameters of a controller composing the feedforward control part.

7.  The setting support device (1) according to claim 1, wherein the relational graphs represent the relations between values of the performance indexes and the first control parameters; and the display control part (70) controls the simultaneous or selective display of relational graphs for each of the various performance indexes.

8.  The setting support device (1) according to claim 1, wherein the relational graphs represent the relations between values of the performance indexes and the first control parameters; and
    the setting support device (1) further comprises a parameter setting part (20), wherein the parameter setting part (20) receives information of any points, selected by a user (5), in the relational graphs, and sets the first control parameters corresponding to the selected points as control parameters used in control processing in the motor control device (2).

9.  The setting support device (1) according to claim 1, wherein the relational graphs represent the relations between values of the performance indexes and the m types of first control parameters by means of m axes, wherein m is an integer greater than 2; and
    the display control part (70) controls the change of at least one of display range and resolution in the axes.

10. A setting support method, for supporting the setting of a plurality of control parameters (A, B, C, P', $C'_p$, $C'_v$) used in control processing in a motor control device (2), and the setting support method comprising:

    a test action instruction step, for changing at least one value among the plurality of control parameters (A, B, C, P', $C'_p$, $C'_v$), so as to enable the motor control device (2) to actually control multiple test actions, or controlling multiple test actions by utilizing the simulation of a hypothetical model of the motor control device (2);
    a parameter adjustment step, for setting whether to make the second control parameters, except the first control parameters of which the values are changed in the test actions, among the plurality of control parameters (A, B, C, P', $C'_p$, $C'_v$) to change along with the first control parameters based on whether the second control parameters affect the first control parameters; and
    a performance index calculation step, for working out performance indexes of the control of the motor control device (2) according to a result of the test actions; the setting support method being **characterized in** comprising:

    a display control step, controlling display by correlating the performance indexes worked out by the performance index calculation step with the values of the first control parameters, wherein
    the display control step includes controlling the display of relational graphs, wherein the relational graphs represent the relations between values of the performance indexes and the m types of first control parameters; and when the performance indexes are correlated with the n types of first control parameters, the display control step controls the simultaneous or selective display of relational graphs for each of m combinations selected from n combinations, wherein m is an integer greater than 2, and n is an integer meeting n ≧ m.

11. An information processing program, for being configured to enable a computer to exert functions as a setting support device (1) according to any one of claims 1-9, wherein the information processing program is configured to enable the computer to exert functions as every part.

12. A recording medium, recording an information processing program according to claim 11 and being readable by a computer.

**Patentansprüche**

1. Einstellunterstützungsvorrichtung (1), die die Einstellung einer Vielzahl von Steuerparametern (A, B, C, P', C'$_p$, C'$_v$) unterstützt, die bei der Steuerverarbeitung in einer Motorsteuervorrichtung (2) verwendet werden, und wobei die Einstellungsunterstützungsvorrichtung (1) umfasst:

ein Testaktionsanweisungsteil (24), das mindestens einen Wert unter der Vielzahl von Steuerparametern (A, B, C, P', C'$_p$, C'$_v$) ändert, um die Motorsteuervorrichtung (2) in die Lage zu versetzen, mehrere Testaktionen tatsächlich zu steuern, oder mehrere Testaktionen unter Verwendung der Simulation eines hypothetischen Modells der Motorsteuervorrichtung zu steuern, wobei die Vielzahl von Steuerparametern erste Steuerparameter und zweite Steuerparameter umfasst;
ein Parametereinstellteil (30), das einstellt, ob die zweiten Steuerparameter, mit Ausnahme der ersten Steuerparameter, deren Werte in den Testaktionen geändert werden, unter der Vielzahl von Steuerparametern (A, B, C, P', C'$_p$, C'$_v$) zusammen mit den ersten Steuerparametern geändert werden sollen, basierend darauf, ob die zweiten Steuerparameter die ersten Steuerparameter beeinflussen; und
ein Leistungsindex-Berechnungsteil (60), das Leistungsindizes der Steuerung der Motorsteuervorrichtung (2) gemäß einem Ergebnis der Testaktionen ausarbeitet; wobei die Einstellunterstützungsvorrichtung (1) **dadurch gekennzeichnet ist, dass** sie ferner umfasst:

ein Anzeigesteuerteil (70), das die Anzeige steuert, indem es die von dem Leistungsindex-Berechnungsteil (60) ausgearbeiteten Leistungsindizes mit den Werten der ersten Steuerparameter korreliert, wobei das Anzeigesteuerteil (70) die Anzeige von relationalen Graphen steuert, wobei die relationalen Graphen die Beziehungen zwischen Werten der Leistungsindizes und den m Typen von ersten Steuerparametern darstellen; und wenn die Leistungsindizes mit den n Typen von ersten Steuerparametern korreliert sind, steuert das Anzeigesteuerteil (70) die gleichzeitige oder selektive Anzeige von relationalen Graphen für jede von m Kombinationen, ausgewählt aus n Kombinationen, wobei m eine ganze Zahl größer als 2 ist und n eine ganze Zahl ist, die n≧m erfüllt.

2. Einstellunterstützungsvorrichtung (1) gemäß Anspruch 1, wobei
das Parametereinstellteil (30) die zweiten Steuerparameter so einstellt, dass sie sich zusammen mit den ersten Steuerparametern ändern oder als beliebige Festwerte einstellt.

3. Einstellunterstützungsvorrichtung (1) gemäß irgendeinem der Ansprüche 1-2, wobei
die Steuerparameter (A, B, C, P', C'$_p$, C'$_v$) Steuerparameter einer Steuerung sind, die ein Rückkopplungssteuersystem im Motorsteuergerät (2) bildet.

4. Einstellunterstützungsvorrichtung (1) gemäß Anspruch 3, wobei
die ersten Steuerparameter die geschwindigkeitsproportionale Verstärkung einer Geschwindigkeitssteuerung (22, 54), die das Rückkopplungssteuersystem bildet, enthalten.

5. Einstellunterstützungsvorrichtung (1) gemäß Anspruch 4, wobei
die zweiten Steuerparameter die Grenzfrequenz eines Drehmomentfilters (23) enthalten, der das Rückkopplungssteuersystem bildet.

6. Einstellunterstützungsvorrichtung (1) gemäß Anspruch 3, wobei

die Motorsteuervorrichtung (2) ein Feedforward-Steuersteil aufweist, wobei das Feedforward-Steuersteil auf der Grundlage des hypothetischen Modells der Motorsteuervorrichtung (2) mindestens eines von einer Modellposition, Modellgeschwindigkeit und Modelldrehmoment als Zielwerte der Position, Geschwindigkeit und des Drehmoments eines Motors (3) ausgibt; und

die Steuerparameter (A, B, C,P', C'$_p$, C'$_v$) ferner Steuerparameter einer Steuerung enthalten, die das Feedforward-Steuerungsteil bildet.

7. Einstellunterstützungsvorrichtung (1) gemäß Anspruch 1, wobei die relationalen Graphen die Beziehungen zwischen Werten der Leistungsindizes und den ersten Steuerparametern darstellen; und das Anzeigesteuerteil (70) die gleichzeitige oder selektive Anzeige von relationalen Graphen für jeden der verschiedenen Leistungsindizes steuert.

8. Einstellunterstützungsvorrichtung (1) gemäß Anspruch 1, wobei die relationalen Graphen die Beziehungen zwischen Werten der Leistungsindizes und den ersten Steuerparametern darstellen; und

die Einstellungsunterstützungsvorrichtung (1) ferner ein Parametereinstellteil (20) umfasst, wobei das Parametereinstellteil (20) Informationen über beliebige, von einem Benutzer (5) ausgewählte Punkte in den relationalen Graphen empfängt und die ersten Steuerparameter, die den ausgewählten Punkten entsprechen, als Steuerparameter einstellt, die bei der Steuerverarbeitung in der Motorsteuervorrichtung (2) verwendet werden.

9. Einstellunterstützungsvorrichtung (1) gemäß Anspruch 1, wobei die relationalen Graphen die Beziehungen zwischen Werten der Leistungsindizes und den m Typen von ersten Steuerparametern mittels m Achsen darstellen, wobei m eine ganze Zahl größer als 2 ist; und

das Anzeigesteuerteil (70) die Änderung von mindestens einem von Anzeigebereich und Auflösung in den Achsen steuert.

10. Einstellunterstützungsverfahren zum Unterstützen der Einstellung einer Vielzahl von Steuerparametern (A, B, C, P', C'$_p$, C'$_v$), die bei der Steuerverarbeitung in einer Motorsteuervorrichtung (2) verwendet werden, wobei das Einstellungsunterstützungsverfahren umfasst:

einen Testaktionsanweisungsschritt zum Ändern mindestens eines Wertes aus der Vielzahl von Steuerparametern (A, B, C, P', C'$_p$, C'$_v$), um die Motorsteuervorrichtung (2) in die Lage zu versetzen, mehrere Testaktionen tatsächlich zu steuern, oder mehrere Testaktionen unter Verwendung der Simulation eines hypothetischen Modells der Motorsteuervorrichtung (2) zu steuern;

einen Parametereinstellschritt zum Einstellen, ob die zweiten Steuerparameter, mit Ausnahme der ersten Steuerparameter, deren Werte in den Testaktionen geändert werden, unter der Vielzahl von Steuerparametern (A, B, C, P', C'$_p$, C'$_v$) zusammen mit den ersten Steuerparametern geändert werden sollen, basierend darauf, ob die zweiten Steuerparameter die ersten Steuerparameter beeinflussen; und

einen Leistungsindex-Berechnungsschritt zum Ausarbeiten von Leistungsindizes der Steuerung der Motorsteuervorrichtung (2) entsprechend einem Ergebnis der Testaktionen; wobei das Einstellunterstützungsverfahren **dadurch gekennzeichnet ist, dass** es umfasst:

einen Anzeigesteuerungsschritt, der die Anzeige durch Korrelieren der durch den Leistungsindex-Berechnungsschritt ausgearbeiteten Leistungsindizes mit den Werten der ersten Steuerparameter steuert, wobei

der Anzeigesteuerungsschritt das Steuern der Anzeige von relationalen Graphen umfasst, wobei die relationalen Graphen die Beziehungen zwischen Werten der Leistungsindizes und den m Typen erster Steuerparameter darstellen; und wenn die Leistungsindizes mit den n Typen erster Steuerparameter korreliert sind, steuert der Anzeigesteuerungsschritt die gleichzeitige oder selektive Anzeige von relationalen Graphen für jede von m Kombinationen, die aus n Kombinationen ausgewählt sind, wobei m eine ganze Zahl größer als 2 ist und n eine ganze Zahl ist, die n≧m erfüllt.

11. Informationsverarbeitungsprogramm, das so konfiguriert ist, dass es einen Computer in die Lage versetzt, Funktionen als Einstellunterstützungsvorrichtung (1) gemäß irgendeinem der Ansprüche 1-9 auszuüben, wobei das Informationsverarbeitungsprogramm so konfiguriert ist, dass es den Computer in die Lage versetzt, Funktionen als jedes Teil auszuüben.

12. Ein Aufzeichnungsmedium, das ein Informationsverarbeitungsprogramm gemäß Anspruch 11 aufzeichnet und von einem Computer lesbar ist.

**Revendications**

1. Dispositif d'assistance au réglage (1), apportant une assistance au réglage d'une pluralité de paramètres de commande (A, B, C, P', C'$_p$, C'$_v$) utilisés dans le traitement de commande dans un dispositif de commande de moteur (2), le dispositif d'assistance au réglage (1) comprenant :

   un élément d'instruction d'action de test (24) modifiant au moins une valeur parmi la pluralité de paramètres de commande (A, B, C, P', C'$_p$, C'$_v$) de manière à permettre au dispositif de commande de moteur (2) de commander réellement de multiples actions de test, ou commandant de multiples actions de test en utilisant la simulation d'un modèle hypothétique du dispositif de commande de moteur, la pluralité de paramètres de commande comprenant des premiers paramètres de commande et des seconds paramètres de commande ;
   un élément d'ajustement de paramètres (30) établissant s'il faut faire changer les seconds paramètres de commande, à l'exception des premiers paramètres de commande dont les valeurs sont modifiées dans les actions de test, parmi la pluralité de paramètres de commande (A, B, C, P', C'$_p$, C'$_v$) en même temps que les premiers paramètres de commande selon que les seconds paramètres de commande affectent les premiers paramètres de commande ; et
   un élément de calcul d'indices de performance (60) établissant des indices de performance de la commande du dispositif de commande de moteur (2) en fonction d'un résultat des actions de test ; le dispositif d'assistance au réglage (1) étant **caractérisé en ce qu'**il comprend en outre :

   un élément de commande d'affichage (70) commandant l'affichage en corrélant les indices de performance établis par l'élément de calcul d'indices de performance (60) avec les valeurs des premiers paramètres de commande,
   l'élément de commande d'affichage (70) commandant l'affichage de graphiques relationnels, les graphiques relationnels représentant les relations entre des valeurs des indices de performance et les m types des premiers paramètres de commande ; et, lorsque les indices de performance sont corrélés avec les n types de premiers paramètres de commande, l'élément de commande d'affichage (70) commande l'affichage simultané ou sélectif de graphiques relationnels pour chacune des m combinaisons sélectionnées parmi n combinaisons, m étant un nombre entier supérieur à 2, et n étant un nombre entier satisfaisant à n $\geq$ m.

2. Dispositif d'assistance au réglage (1) selon la revendication 1, dans lequel l'élément d'ajustement de paramètres (30) établit les seconds paramètres de commande de manière à ce qu'ils changent avec les premiers paramètres de commande ou sous forme de valeurs fixes quelconques.

3. Dispositif d'assistance au réglage (1) selon l'une quelconque des revendications 1 à 2, dans lequel les paramètres de commande (A, B, C, P', C'$_p$, C'$_v$) sont des paramètres de commande d'un contrôleur composant un système de commande de rétroaction dans le dispositif de commande de moteur (2).

4. Dispositif d'assistance au réglage (1) selon la revendication 3, dans lequel les premiers paramètres de commande incluent le gain proportionnel de vitesse d'un contrôleur de vitesse (22, 54) composant le système de commande de rétroaction.

5. Dispositif d'assistance au réglage (1) selon la revendication 4, dans lequel les secondes paramètres de commande incluent la fréquence de coupure d'un filtre de couple (23) composant le système de commande de rétroaction.

6. Dispositif d'assistance au réglage (1) selon la revendication 3, dans lequel le dispositif de commande de moteur (2) comprend un élément de commande prédictive, l'élément de commande prédictive éditant, en se basant sur le modèle hypothétique du dispositif de commande de moteur (2), au moins une position modèle, une vitesse modèle et un coupleur modèle sous forme de valeurs cibles de la position, de la vitesse et du couple d'un moteur (3) ; et les paramètres de commande (A, B, C, P', C'$_p$, C'$_v$) incluant en outre des paramètres de commande d'un contrôleur composant l'élément de commande prédictive.

7. Dispositif d'assistance au réglage (1) selon la revendication 1, dans lequel graphiques relationnels représentent les relations entre des valeurs des indices de performance et les premiers paramètres de commande ; et l'élément de commande d'affichage (70) commande l'affichage simultané ou sélectif de graphiques relationnels pour chacun des indices de performance variés.

8. Dispositif d'assistance au réglage (1) selon la revendication 1, dans lequel les graphiques relationnels représentent les relations entre des valeurs des indices de performance et les premiers paramètres de commande ; et le dispositif d'assistance au réglage (1) comprend en outre un élément de réglage de paramètres (20), l'élément de réglage de paramètres (20) recevant des informations de points quelconques sélectionnés par un utilisateur (5) dans les graphiques relationnels, et établissant les premiers paramètres de commande correspondant aux points sélectionnés sous forme de paramètres de commande utilisés dans le traitement de commande dans le dispositif de commande de moteur (2).

9. Dispositif d'assistance au réglage (1) selon la revendication 1, dans lequel les graphiques relationnels représentent les relations entre des valeurs des indices de performance et les m types de premiers paramètres de commande au moyen de m axes, m étant un nombre entier supérieur à 2 ; et l'élément de commande d'affichage (70) commandant le changement d'au moins un élément parmi une plage et une définition d'affichage dans les axes.

10. Procédé d'assistance au réglage assisté au réglage une pluralité de paramètres de commande (A, B, C, P', C'$_p$, C'$_v$) utilisés dans le traitement de commande dans un dispositif de commande de moteur (2), le procédé d'assistance au réglage comprenant :

une étape d'instruction d'action de test pour modifier au moins une valeur parmi la pluralité de paramètres de commande (A, B, C, P', C'$_p$, C'$_v$) de manière à permettre au dispositif de commande de moteur (2) de commander réellement de multiples actions de test, ou de commander de multiples actions de test en utilisant la simulation d'un modèle hypothétique du dispositif de commande de moteur (2) ;
une étape d'ajustement de paramètres pour établir s'il faut faire changer les seconds paramètres de commande, à l'exception des premiers paramètres de commande dont les valeurs sont modifiées dans les actions de test, parmi la pluralité de paramètres de commande (A, B, C, P', C'$_p$, C'$_v$) en même temps que les premiers paramètres de commande selon que les seconds paramètres de commande affectent les premiers paramètres de commande ; et
une étape de calcul d'indices de performance pour établir des indices de performance de la commande du dispositif de commande de moteur (2) en fonction d'un résultat des actions de test ; le procédé d'assistance au réglage étant **caractérisé en ce qu'**il comprend :

une étape de commande d'affichage commandant l'affichage en corrélant les indices de performance établis par l'élément de calcul d'indices de performance avec les valeurs des premiers paramètres de commande,
l'étape de commande d'affichage incluant la commande de l'affichage de graphiques relationnels, les graphiques relationnels représentant les relations entre des valeurs des indices de performance et les m types des premiers paramètres de commande ; et, lorsque les indices de performance sont corrélés avec les n types de premiers paramètres de commande, l'étape de commande d'affichage commande l'affichage simultané ou sélectif de graphiques relationnels pour chacune des m combinaisons sélectionnées parmi n combinaisons, m étant un nombre entier supérieur à 2, et n étant un nombre entier satisfaisant à n ≥ m.

11. Programme de traitement d'informations destiné à être configuré pour permettre à un ordinateur d'exercer des fonctions de dispositif d'assistance au réglage (1) selon l'une quelconque des revendications 1 à 9, le programme de traitement d'informations étant configuré pour permettre à l'ordinateur d'exercer des fonctions comme tous les éléments.

12. Support d'enregistrement enregistrant un programme de traitement d'informations selon la revendication 11 et étant lisible par un ordinateur.

EP 3 220 219 B1

**Fig.1**

Fig.2

Fig.3

Fig.4

Fig.5

Fig.6

Start adjustment

Determine performance indexes
for adjustment — S201

Determine a setting method for
control parameters — S202

Repeat 1 — S203

Change the values of the
parameters A — S204

Repeat 2 — S205

Change the values of the
parameters B — S206

Measuring response — S207

Repeat 2 — S208

Repeat 1 — S209

Display a measurment result — S210

Determine values of the control
parameters — S211

Set the control parameters for the
driver — S212

End adjustment

Fig.7

Performance
index

Control parameter A

# Fig.8A

Performance
index α

Performance
index β

Control parameter A

# Fig.8B

Combination example

EP 3 220 219 B1

| Control parameter A | Performance index α | Performance index β | Purpose of utilizing display for adjustment |
|---|---|---|---|
| Speed proportional gain | Setting time | Overshoot | Tradeoff between adjustment and positioning responsibility (setting time) and overshoot |
| Speed proportional gain | Bandwidth | Phase margin | Tradeoff between adjustment responsibility (bandwidth) and stability (phase margin) |

901

Fig.9

Fig.10A

Fig.10B

Combination example

| Control parameter A | Control parameter B | Performance index | Purpose of utilizing display for adjustment |
|---|---|---|---|
| Speed proportional gain | Speed integral gain | Speed loop peak gain | Control a gain range in which a speed loop cannot oscillate (limits of gain can be set) |
| Speed proportional gain | Position proportional gain | Setting time | Work out a gain combination minimizing setting time |
| Speed proportional gain | Position proportional gain | Overshoot | Work out a gain combination with small overshoot |
| Speed proportional gain | Position proportional gain | Phase margin | Control a gain range which does not impair positioning loop stability (limits of gain can be set) |
| Speed proportional gain | Gain of a model tracking control part | Setting time | Work out a gain combination minimizing setting time |
| Speed proportional gain | Gain of a model tracking control part | Overshoot | Work out a gain combination with small overshoot |

# Fig.11

EP 3 220 219 B1

Fig.12A

Fig.12B

Peak gain

Bandwidth

Closed-loop characteristic

(Position closed loop, speed closed loop)

# Fig.13A

Gain margin

Open-loop characteristic

Phase margin

(Position open loop, speed open loop)

# Fig.13B

Fig.14

Fig.15

Not set the status of notch filters

1601

Peak gain for speed closed loop

1611

1613    1612

Speed proportional (Hz)

## Fig.16A

Have set the status of notch filters

1602

Peak gain for speed closed loop

1621

1623                                          1622

Speed proportional (Hz)

## Fig.16B

1701

1711 — **▼ Gain**

Coupled

Speed Proportional | 50.0 | Hz

Speed Integral ☑ | 11.9 | Hz

Position Proportional ☑ | 10.8 | Hz

1712 — **▼ Torque Filter**

☑ Enable    Coupled

Torque Filter ☐ | 500.0 | Hz

1713 — **▼ Notch Filter 1**

☑ Enable    Frequency | 480.0 | Hz

Q value | 2.00

Depth | 20 | dB

**▶ Notch Filter 2**

**▶ Notch Filter 3**

**▶ Notch Filter 4**

# Fig.17

Case of setting the cutoff frequency
of torque LPF as a fixed value

1801

Peak gain for speed closed loop

1811

1813

Speed proportional (Hz)

1812

## Fig.18A

Case of making the cutoff frequency of LPF to
change along with speed proportional gain

1802

Peak gain for speed closed loop

1821

1823

Speed proportional (Hz)

1822

## Fig.18B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009122779 A

**Non-patent literature cited in the description**

- **MITSUBISHI ELECTRIC.** *MR Configurator,* 10 March 2016, URL: http://www.mitsubishielectric.co.jp/fa/ products/drv/servo/smerit/mr/setup_popup.html

- **MAREK STULRAJTER et al.** *Introduction Motor Control Application Tuning (MCAT) Tool for 3-Phase PMSM,* 01 January 2013